# EUROPÄISCHE PATENTANMELDUNG

(11) **EP 0 853 320 A2**
(43) Veröffentlichungstag der Anmeldung: **15.07.1998**
(21) Anmeldenummer: 98100160.5
(22) Anmeldetag: 07.01.1998
(51) Int. Cl.: G21F 9/36

(54) **Verdichtung zu entsorgender Steuer- und Absorberelemente aus Leichtwasser-Reaktoren**

(30) Priorität: 10.01.1997 DE 19700651
(71) Anmelder: SIEMENS AKTIENGESELLSCHAFT, 80333 München (DE)
(72) Erfinder: Knecht, Klaus, Dipl.-Ing., 91058 Erlangen (DE); Keppler, Rainer, 91099 Poxdorf (DE)

(57) **Zusammenfassung**

Um in Druckwasser-Reaktoren oder Siedewasser-Reaktoren die Absorberfinger (3) oder Absorberblätter verbrauchter Steuerelemente in Lagerbehältern (17) zu lagern, werden sie von den Steuerelementen abgetrennt und nicht zerstückelt (wobei große Mengen radioaktiver Stoffe freigesetzt werden würden), sondern nur deformiert, nämlich zu Spulen (10) gewickelt, die platzsparend in den Lagerbehältern gestapelt werden können.

## Beschreibung

Die Erfindung betrifft ein verfahren, um in einem leichtwassergekühlten Kernreaktor Steuerelemente mit langgestreckten Bauteilen, in denen verbrauchtes Absorbermaterial gasdicht eingeschlossen ist, zu verdichten und für die spätere Entsorgung in Lagerbehältern zu verpacken. Die Erfindung betrifft ferner eine Vorrichtung zur Durchführung des Verfahrens und die entsprechend bearbeiteten Bauteile mit dem Absorbermaterial.

In Leichtwasser-Reaktoren (Siedewasser- und Druckwasserreaktoren) werden Steuerelemente zur Regelung der Reaktorleistung eingesetzt. In Druckwasserreaktor-Erstkernen werden zur Kompensation der Überschußkapazität ebenfalls Absorberelemente benutzt.

Die vorhandenen, gebräuchlichen Absorberelemente enthalten Neutronenabsorbermaterial (z.B. B₄C in Tabletten- oder Pulverform, AgInCd Stangen), welches in gasdicht verschlossenen Rohren enthalten ist, die an einem Kopfstück befestigt sind.

Die Bauteile und Materialien sowohl der kreuzförmig ausgebildeten Steuerelemente mit Absorberblättern von Siedewasser-Reaktoren, als auch von spinnenförmigen Steuerelementen von Druckwasser-Reaktoren unterliegen während ihres Betriebs unterschiedlichen Beanspruchungen, welche die Einsatzzeit der Steuerelemente auf weniger als die Betriebsdauer eines Reaktors begrenzen können.

Die außer Betrieb genommenen Kernbauteile sind hochaktiv und enthalten (je nach verwendetem Absorbermaterial) radioaktive, durch Neutroneneinfang gebildete Folgeprodukte, z.B. auch Tritium (H₃). Die vorgenannten Kernbauteile müssen nach ihrer Außerbetriebnahme aus dem Brennelementbecken, welches zur Zwischenlagerung benutzt wird, entfernt werden.

Bisher wurden solche Kernbauteile unter Wasser zerschnitten und die Teile wurden sortiert und in übliche Abschirmbehälter gefüllt. Die dabei angewendeten Verfahren gingen grundsätz_ lich davon aus, daß während des Zerlegens Aktivität aus den Kernbauteilen freigesetzt wurde. Diese freigesetzte Aktivität mußte aufgefangen werden. Die zerschnittenen Teile wurden zeitaufwendig unter Wasser sortiert und in Abschirmbehälter gefüllt. Der Füllgrad der so befüllten Abschirmbehälter war bei dieser Vorgehensweise nicht optimal.

Die Erfindung hat sich die Aufgabe gestellt, ein Verfahren zur Lagerung von verbrauchten Steuerelementen von Leichtwasser-Reaktoren anzugeben, welches die effiziente Ausnutzung von Lagerbehältern zur Lagerung von Bauteilen der Steuerelemente erlaubt, die Zeit für die Lagerungsvorbereitung verkürzt und dabei die Freisetzung größerer Aktivitäten vermeidet.

Die Aufgabe wird erfindungsgemäß mit einem Verfahren nach Anspruch 1 gelöst. Vorteilhafte Weiterbildungen des Verfahrens sind in den Unteransprüchen angegeben.

Dazu werden die Bauteile der Steuerelemente, welche verbrauchtes Absorbermaterial enthalten, in der Regel von ihren Kopfstücken gelöst oder abgeschnitten und als ganze zu Spulen aufgewickelt. Im Falle von kreuzförmig ausgebildeten Steuerelementen, die aus mehreren Absorberblättern bestehen, werden die Absorberblätter entlang ihrer Längsachse, z.B. durch Trennschnitte, voneinander getrennt. Die so entstehenden Einzelblätter werden dann zu Spulen aufgewickelt.

Bei diesem Vorgehen brauchen die das aktivierte Absorbermaterial umgebenden Hüllrohre nicht zerstört zu werden. Es kann also vermieden werden, daß radioaktive Substanzen aus den gasdichten Hüllrohren entweichen.

Hierzu können Einzelstäbe von Steuer- oder Absorberelementen von Druckwasser-Reaktoren und die einzelnen Absorberblätter von Siedewasser-Reaktoren einer unter Wasser arbeitenden Wikkeleinrichtung zugeführt werden.

Die Absorberfinger und Absorberblätter werden vorteilhaft zunächst von ihren Kopfstücken und anderen Strukturelementen getrennt, bevor sie von der Wickeleinrichtung zu Spulen mit einer dichtestmöglichen Spiralwicklung aufgewickelt werden. Die Wickeleinrichtung ist dabei z.B. so ausgeführt, daß die entstehenden Spulen eine hohle Seele besitzen. Diese Spulen können anschließend durch geeignete Sicherungsmittel im aufgewickelten Zustand gehalten werden. Das kann z.B. dadurch erreicht werden, daß um die Spulen direkt nach dem Aufwickeln ein Sicherungsband gelegt wird.

Im Rahmen der Erfindung kann die Sicherung der fertigen Spule durch Einfalzen einer das Wickelgut umgebenden Wickelspule erreicht werden.

Die gesicherten, spiralförmig dicht gewickelten Spulen können anschließend in einem Korb gestapelt werden, der von seinen äußeren Dimensionen her in übliche Abschirmbehälter paßt.

Die restlichen Bauteile der zu entsorgenden Steuerelemente, die i.a. keine hochaktivierten Substanzen enthalten, wie z.B. spinnenförmige Kopfstücke oder Strukturelemente, können durch Zerschneiden und Verpressen verdichtet und in den noch vorhandenen Hohlraum im Zentrum der im Korb gestapelten Spulen verbracht werden. Die Stapelung der verdichteten Bauteile von Steuerelementen in einem Korb vereinfacht die spätere Handhabung im Abschirmbehälter.

Sämtliche Verfahrensschritte, wie Trennen, Aufwickeln und Stapeln, können z.B. im Brennelementbecken des Kernreaktors durchgeführt werden.

Das Aufwickeln von langgestreckten, Absorbermaterial enthaltenden Bauteilen von Steuerelemente auf die oben beschriebene Weise besitzt die Vorteile, daß das Wickelgut und die übrigen verdichteten Bauteile dicht in übliche Abschirmbehälter verpackt werden können und so eine effiziente Raumausstattung gestatten, und daß der Verdichtungs- und Verpackungsvorgang insgesamt weniger Zeit beansprucht, als das bisher übliche Zerschneiden, Sortieren, Verpressen und Verpacken sämtlicher Bauteile.

Nachfolgend wird die Erfindung anhand eines Ausführungsbeispiels näher erläutert.

Es zeigen die Figuren:
- FIG 1: eine Seitenansicht einer Wickelvorrichtung für Absorberfinger und Absorberblätter;
- FIG 2: einen Schnitt durch eine Wickeleinrichtung nach FIG 1;
- FIG 3: einen Schnitt durch einen Korb mit Spulen aus Absorberfingern und Absorberblättern und verdichteten Bauteilen im Spulenzentrum.

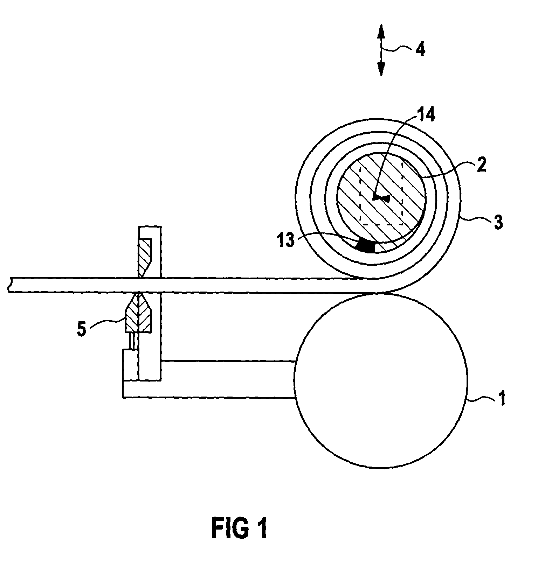

FIG 1 zeigt einen Spulengreifer 2, der um seinen Mittelpunkt drehbar ausgeführt ist und auf dessen Umfang ein Absorberfinger oder ein Absorberblatt 3 spiralförmig aufgewickelt werden kann. Der Spulengreifer 2 weist dazu an seinem äußeren Umfang ein Fixiermittel 13 auf, mit dem ein Anfang des Absorberfingers oder des Absorberblattes 3 auf dem Umfang des Spulengreifers 2 festgesetzt werden kann. Durch Rotation um eine Wickelachse 14 und Aufwickeln entsteht aus dem langgestreckten Absorberfinger oder Absorberblatt 3 eine kompakte Spule mit spiralförmiger Wicklung.

Die Wickeleinrichtung besitzt eine Biegerolle 1, um den Absorberfinger oder das Absorberblatt 3 gegen den äußeren Umfang der bereits auf dem Spulengreifer 2 aufgewickelten Spule zu drücken. Dadurch wird erreicht, daß das der Spule zugeführte Wickelgut fest an deren äußeren Umfang anliegt und eine möglichst dichte Wicklung entsteht.

Die Wickelachse 14 des Spulengreifers 2 kann zum Ausgleich der stetigen Umfangsvergrößerung der beim Aufwickeln entstehenden Spule entlang einer Achse in Richtung der Pfeile 4 verfahren werden, also senkrecht zur Längsachse des Wickelgutes (Absorberfinger oder Absorberblatt), wobei dieses Wickel-gut seinerseits vorteilhaft in seiner Längsrichtung entsprechend der Wickelgeschwindigkeit verfahren wird.

Ist ein vorbestimmter, maximaler Umfang der aufgewickelten Spule erreicht, so kann ein zugeordnetes Schneidwerkzeug 5 den Absorberfinger oder das Absorberblatt 3 von der übrigen Spule abtrennen. Vorteilhaft wird dabei nur eine Halterung des Bauteils an anderen Teilen des Steuerelementes durchschnitten, um das Bauteil als gasdichte Hülle des Absorbermaterials zu erhalten. Bei vorgegebenem maximalen Umfang der aufgewickelten Spule kann daher auch bestimmt werden, welchen inneren Durchmesser die Spule haben soll, d.h. mit welchem Abstand zwischen der Biegerolle 1 und der Wickelachse 14 das Aufwickeln begonnen wird.

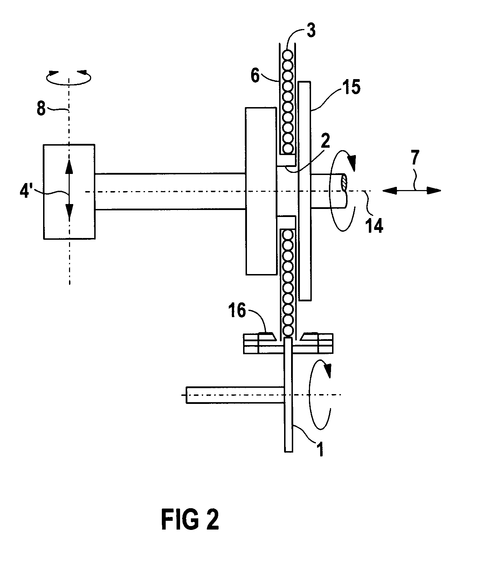

FIG 2 zeigt einen Schnitt einer Wickelvorrichtung nach FIG 1, bei dem gleichwirkende Elemente mit gleichen Bezugszeichen wie in FIG 1 bezeichnet sind.

Der Spulengreifer 2 ist drehbar um seine Wickelachse 14 mit einem entsprechenden Antrieb 4' ausgeführt und besitzt ein zugeordnetes Stützelement 15, das die auf dem Spulengreifer 2 entstehende Spule mit zugeordneter Wickelspule 6 auf dem Spulengreifer 2 fixiert. Die fertige Spule aus Absorberfingern oder Absorberblättern 3 kann anschließend mit Hilfe eines Falzelementes 16 durch Einfalzen von seitlichen Backen 6 einer die Spule umgebenden Wickelspule im aufgewickelten Zustand gehalten werden.

Gemäß der Erfindung kann die fertige Spule aber auch durch ein Sicherungsband im aufgewickelten Zustand gehalten werden.

Zur Entnahme der Spule kann der Spulengreifer 2 entlang seiner Wickelachse 14 in Richtung der Pfeile 7 verfahren werden, um den Spulengreifer 2 vom Stützelement 15 zu trennen und die Spule freizugeben. Anschließend kann der Spulengreifer 2 eine Schwenkbewegung um eine Schwenkachse 8 ausführen, und die gesicherte Spule kann vom Spulengreifer 2 abgezogen werden.

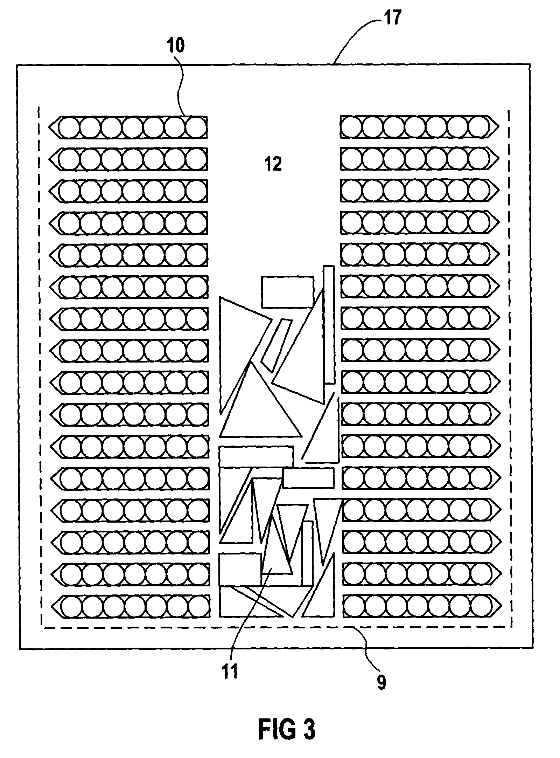

FIG 3 zeigt mehrere von einer Wickelvorrichtung erzeugte Spulen 10, die gesichert sind durch Einfalzen der seitlichen Backen von Wickelspulen auf denen die Absorberfinger aufgewickelt sind. Die Spulen sind im Inneren eines Korbes 9 gestapelt, der von seinen äußeren Dimensionen in einen üblichen Abschirmbehälter 17 paßt. Das hohle Zentrum 12 der Spulen ist mit verdichtetem Restmaterial 11 von Steuerelementen dicht befüllt, um eine effiziente Raumausnutzung des Abschirmbehälters 17 zu ermöglichen.

Gemäß der Erfindung kann insbesondere im Wasserbecken eines leichtwassergekühlten Kernreaktors eine solche Vorrichtung stationär oder vorübergehend angeordnet sein, die langgestreckte Bauteile, die aus einem verbrauchten Steuerelement des Kernreaktors stammen und gasdicht eingeschlossenes Absorbermaterial enthalten, für die Lagerung in einem Lagerbehälter vorbereitet. Eine solche Vorrichtung besitzt nach FIG 1 und 2 insbesondere den Rotationsantrieb 4' für die Wickelachse 14, die neben dem Bauteil und ungefähr senkrecht zur Längsrichtung dieses Bauteils (Absorberfinger oder Absorberblatt) angeordnet ist und zu-einem Greifwerkzeug gehört, das z.B. den Spulengreifer 2 trägt und an dem ein freies Ende dieses ursprünglich langgestreckten Bauteils befestigbar ist. Das Bauteil ist in seiner Längsrichtung relativ zum Greifwerkzeug verschiebbar, während an seiner anderen, der Wickelachse des Greifwerkzeugs gegenüberliegenden Seite die Preß- und Biegerolle 1 angeordnet ist. Der Abstand zwischen dieser Preß- und Biegerolle 1 und der Wickelachse ist entsprechend der Dicke des entstehenden Wickels veränderlich.

Auf diese Weise werden Spulen hergestellt, die aus einem ein Absorbermaterial enthaltenden, ursprünglich langgestreckten Bauteil eines verbrauchten Steuerelements eines leichtwassergekühlten Kernreaktors bestehen und platzsparend in üblichen Lagerbehältern zwischengelagert oder endgelagert werden können, wobei der Austritt größerer Mengen radioaktiver Stoffe aus dem Absorbermaterial vermieden werden kann.

## Patentansprüche

1. Verfahren, um in einem leichtwassergekühlten Kernreaktor Steuerelemente mit langgestreckten Bauteilen, in denen verbrauchtes Absorbermaterial gasdicht eingeschlossen ist, in Lagerbehältern zu verpacken,
**dadurch gekennzeichnet,** daß die langgestreckten Bauteile zu Spulen (10) aufgewickelt und die Spulen (10) in den Lagerbehältern (17) verpackt werden.

2. Verfahren nach Anspruch 1 für Steuerelemente von Druckwasser-Reaktoren, bei denen als Bauteile eine Gruppe von Absorberfingern an Kopfstücken befestigt ist,
**dadurch gekennzeichnet,** daß die Absorberfinger vom Kopfstück gelöst oder abgeschnitten und als ganze aufgewickelt werden.

3. Verfahren nach Anspruch 1 für Steuerelemente von Siedewasser-Reaktoren, bei denen als Bauteile mehrere Absorberblätter kreuzförmig aneinander befestigt sind,
**dadurch gekennzeichnet,** daß die Absorberblätter entlang ihrer Längsachse voneinander getrennt und als ganze aufgewickelt werden.

4. Verfahren nach einem der Ansprüche 1 bis 3,
**dadurch gekennzeichnet**, daß die Spulen (10) nach dem Aufwickeln durch ein Sicherungsband im aufgewickelten Zustand gehalten werden.

5. Verfahren nach einem der Ansprüche 1 bis 3,
**dadurch gekennzeichnet,** daß die Spulen (10) zwischen seitlichen Backen (6) gewickelt werden, und daß die seitlichen Backen (6) nach dem Aufwickeln um die gewikkelten Steuerelemente gebogen werden, um sie im aufgewickelten Zustand zu halten.

6. Verfahren nach einem der Ansprüche 1 bis 5,
**dadurch gekennzeichnet,** daß das Aufwikkeln und Verpacken im Lagerbecken des Kernreaktors durchgeführt wird.

7. Verfahren nach einem der Ansprüche 1 bis 6,
**dadurch gekennzeichnet,** daß die Bauteile zu Spulen mit einer hohlen Seele gewickelt und andere Teile der Steuerelemente in die Seele gepackt werden.

8. Vorrichtung zum Vorbereiten eines langgestreckten Bauteils (3) eines verbrauchten Steuerelements mit gasdicht eingeschlossenem Absorbermaterial für die Lagerung in einem Lagerbehälter,
**gekennzeichnet durch** einen Rotationsantrieb (4') für eine neben dem Bauteil angeordnete und zur Längsrichtung des Bauteils ungefähr senkrechte Wickelachse (14) eines Greifwerkzeugs (2), an dem ein freies Ende des Bauteils (3) befestigbar ist, und eine gegenläufig zum Greifwerkzeug (2) drehbare Preß- und Biegerolle (1), die gegenüber dem Greifwerkzeug (2) an der anderen Seite des Bauteils (3) angeordnet ist, wobei der Abstand der Preß- und Biegerolle (1) von der Wickelachse (14) veränderlich und das Bauteil (3) in Längsrichtung relativ zur Wickelachse verschiebbar ist.

9. Leichtwassergekühlter Kernreaktor mit einem Wasserbecken, in dem eine Vorrichtung nach Anspruch 8 angeordnet ist.

10. Spule aus einem ein Absorbermaterial enthaltenden, ursprünglich langgestreckten Bauteil eines verbrauchten Steuerelements eines leichtwassergekühlten Kernreaktors.
